# FASCICULE DE BREVET EUROPEEN

(11) **EP 3 698 538 B1**
(45) Date de publication et mention de la délivrance du brevet: **18.06.2025**
(21) Numéro de dépôt: 18804036.4
(22) Date de dépôt: 12.10.2018
(51) Int. Cl.: H04L 67/148, H04W 60/00, H04W 8/24, H04W 24/04, H04W 36/00, H04W 36/12

(54) **PROCÉDÉ DE BASCULEMENT D'UN ÉQUIPEMENT DE GESTION DANS UN RÉSEAU DE TÉLÉCOMMUNICATIONS**
VERFAHREN ZUR UMSCHALTUNG EINER MANAGEMENT-EINHEIT IN EINEM TELEKOMMUNIKATIONSNETZ
METHOD FOR TOGGLING OF A MANAGEMENT ENTITY IN A TELECOMMUNICATIONS NETWORK

(30) Priorité: 17.10.2017 FR 1759745
(43) Date de publication de la demande: 26.08.2020
(73) Titulaire: Orange, 92130 Issy-les-Moulineaux (FR)
(72) Inventeur: DUBESSET, Laurent, 92326 Châtillon Cedex (FR); MOUQUET, Antoine, 92326 Châtillon Cedex (FR); HUANG, Xiaofeng, 92326 Châtillon Cedex (FR)
(86) Numéro de dépôt international: PCT/FR2018/052541
(87) Numéro de publication internationale: WO 2019/077239

(56) Documents cités:
- HUAWEI ET AL: "TS 23.501: AMF failure handling", vol. SA WG2, no. Sophia Antipolis, France; 20170821 - 20170825, 21 August 2017 (2017-08-21), XP051325382, Retrieved from the Internet <URL:http://www.3gpp.org/ftp/Meetings_3GPP_SYNC/SA2/Docs/> [retrieved on 20170821]
- HUAWEI ET AL: "TS 23.501: AMF failure handling", vol. SA WG2, no. Sophia Antipolis, France; 20170821 - 20170825, 29 August 2017 (2017-08-29), XP051335932, Retrieved from the Internet <URL:http://www.3gpp.org/ftp/tsg_sa/WG2_Arch/TSGS2_122BIS_Sophia_Antipolis/Docs/> [retrieved on 20170829]
- HUAWEI ET AL: "TS 23.501: Association between the GUAMI and AMF instance", vol. SA WG2, no. San Jose Del Cabo, Mexico; 20170626 - 20170630, 25 June 2017 (2017-06-25), XP051303180, Retrieved from the Internet <URL:http://www.3gpp.org/ftp/Meetings_3GPP_SYNC/SA2/Docs/> [retrieved on 20170625]
- "3rd Generation Partnership Project; Technical Specification Group Services and System Aspects; System Architecture for the 5G System; Stage 2 (Release 15)", 3GPP STANDARD ; TECHNICAL SPECIFICATION ; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.4.0, 28 September 2017 (2017-09-28), pages 1 - 152, XP051337398
- HUAWEI ET AL: "TS 23.501: AMF failure handling", vol. SA WG2, no. Sophia Antipolis, France; 20170821 - 20170825, 21 August 2017 (2017-08-21), XP051325382, Retrieved from the Internet <URL:http://www.3gpp.org/ftp/Meetings_3GPP_SYNC/SA2/Docs/> [retrieved on 20170821]
- HUAWEI ET AL: "TS 23.501: AMF failure handling", vol. SA WG2, no. Sophia Antipolis, France; 20170821 - 20170825, 29 August 2017 (2017-08-29), XP051335932, Retrieved from the Internet <URL:http://www.3gpp.org/ftp/tsg_sa/WG2_Arch/TSGS2_122BIS_Sophia_Antipolis/Docs/> [retrieved on 20170829]
- HUAWEI ET AL: "TS 23.501: Association between the GUAMI and AMF instance", vol. SA WG2, no. San Jose Del Cabo, Mexico; 20170626 - 20170630, 25 June 2017 (2017-06-25), XP051303180, Retrieved from the Internet <URL:http://www.3gpp.org/ftp/Meetings_3GPP_SYNC/SA2/Docs/> [retrieved on 20170625]
- "3rd Generation Partnership Project; Technical Specification Group Services and System Aspects; System Architecture for the 5G System; Stage 2 (Release 15)", 3GPP STANDARD ; TECHNICAL SPECIFICATION ; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.4.0, 28 September 2017 (2017-09-28), pages 1 - 152, XP051337398

## Description

La présente invention concerne un procédé de basculement d'un équipement de gestion dans un réseau de télécommunications, notamment un réseau de télécommunications comprenant un réseau mobile de cinquième génération (5G) telle que définie par le 3GPP (3rd Generation Partnership Project). La présente invention concerne aussi un équipement de gestion, un dispositif-client, un moyen de stockage de données et un programme d'ordinateur.

Comme expliqué dans l'encyclopédie en ligne « Wikipedia », la technologie 5G pourrait permettre des débits de télécommunications de plusieurs gigabits de données par seconde, soit jusqu'à 1000 fois supérieurs aux débits des réseaux mobiles en 2010, et jusqu'à 100 fois supérieurs à ceux de la 4G à l'horizon 2020. Ces débits de données sont susceptibles de répondre à la demande croissante de données avec l'essor des « *smartphones* » et objets communicants, connectés en réseau. Ce type de réseau devrait favoriser le « *cloud computing* », l'intégration et l'interopérabilité d'objets communicants et de « *smartgrids »* et autres réseaux dits intelligents, dans un environnement domotique et dans une « ville intelligente ». On pourrait alors développer l'imagerie 3D ou holographique, le « *datamining* », la gestion du « *big data* » et celle du tout-internet (« *Internet of Everything* » en anglais), expression évoquant un monde où tous les ordinateurs et périphériques pourraient communiquer entre eux. D'autres applications concernent par exemple les jeux interactifs et multi-joueurs complexes, et la traduction automatique et assistée instantanée.

Plusieurs enjeux ont été identifiés, tels que :
- des enjeux économiques liés à un marché émergent, potentiellement riche en applications et débouchés nouveaux ; la 5G pourrait par exemple permettre de nouveaux usages numériques dans des domaines variés tels que la santé (diagnostic automatique ou distant, chirurgie et médication commandées à distance), du travail (télétravail), du déploiement d'objets communicants (dont voitures et autres véhicules sans conducteurs), de détecteurs et senseurs du e-commerce, des « *smartgrids* », de l'intelligence artificielle, de la sécurité (téléprotection, gestion des flux de personnes, de véhicules et de denrées, biens et services en temps réel), de l'éducation et de l'accès à l'information ;
- des enjeux environnementaux et sanitaires concernant les effets de la multiplication du nombre et de la puissance des antennes et relais en termes de nuisances électromagnétiques et de santé environnementale ;
- des enjeux énergétiques consistant à obtenir une meilleure efficacité énergétique pour alimenter les appareils mobiles et le réseau Internet dans son ensemble.

La satisfaction de ces enjeux conduira naturellement à une expérience client enrichie, à condition toutefois que ces réseaux offrent une grande fiabilité de fonctionnement.

A cet égard, un danger bien connu dans les réseaux de communication est le suivant : si, suite à une défaillance, un équipement de gestion perd les données de contexte relatives aux dispositifs-clients (« *User Equipments* », ou UEs, en anglais) qu'il gère, ces dispositifs-clients sont contraints de procéder à un nouvel enregistrement initial (avec authentification). Le nombre de dispositifs-clients devant se réenregistrer en un court laps de temps étant généralement important, cette défaillance risque d'entraîner une surcharge d'autres éléments du réseau, et éventuellement une défaillance de l'un au moins de ces autres éléments (« effet domino »).

Le document TS 23.501 du 3GPP a pris ce danger en considération au sujet spécifiquement d'un équipement de gestion d'un réseau mobile appelé « AMF » (initiales des mots anglais « *Access and Mobility Management Function* » signifiant « Fonction de Gestion de l'Accès et de la Mobilité »). Ce document définit un « AMF Set », qui consiste en un ensemble d'AMFs desservant une certaine zone géographique et une certaine tranche réseau (on rappelle à cet égard que la technique de découpage par « tranches » d'un réseau de télécommunications (« *network slicing* » en anglais), décrite dans le document TR 23.799 du 3GPP, permet à l'opérateur du réseau de créer des sous-réseaux « sur mesure », capables de fournir des solutions optimisées pour des scénarios très variés avec des contraintes très diverses en termes de fonctionnalité et de performance). On notera que l'on peut avoir plusieurs AMF Sets par zone géographique et par tranche réseau.

Le document TS 23.501 définit aussi le « GUAMI » (initiales des mots anglais « *Globally Unique AMF ID »* signifiant « Identité Globalement Unique d'AMF), comme suit :
<GUAMI> := <MCC> <MNC> <AMF Region ID> <AMF Set ID> <AMF Pointer>, où « MCC » (« *Mobile Country Code »)* est un code identifiant le pays, « MNC » (« *Mobile Network Code* ») est un code identifiant l'opérateur du réseau mobile, « AMF Region ID » identifie la zone géographique, « AMF Set ID » identifie de manière unique l'AMF Set dans la zone géographique, et « AMF Pointer » identifie de manière unique un AMF dans l'AMF Set.

Le document TS 23.501 prévoit que, en cas de défaillance d'un AMF, les dispositifs-clients qui étaient servis par cet AMF sont dirigés vers un autre AMF du même AMF Set. Pour éviter que ces dispositifs-clients aient à effectuer une procédure d'enregistrement initial, il est prévu que les données de contexte des dispositifs-clients soient partagées en temps réel entre tous les AMFs d'un même AMF Set. Or cela est contraignant d'un point de vue opérationnel : en effet, si le nombre d'AMF par AMF Set est petit (par exemple 2), suite à la défaillance d'un AMF, les autres AMF de l'AMF Set doivent supporter un surcroît de charge important (par exemple doublé) ; si à l'inverse le nombre d'AMF par AMF Set est grand (par exemple 10), le fait que chaque AMF doive posséder une copie des données de tous les autres AMF de l'AMF Set implique un volume important de données à stocker dans chaque AMF et à échanger entre les AMF. Cet inconvénient peut être réduit en externalisant les données des AMF dans une base de données partagée entre tous les AMF de l'AMF Set ; cependant, si les AMF d'un AMF Set sont placés dans différents sites (ce qui devrait être le cas pour limiter l'impact d'un incident sur un site, par exemple un incendie), les données doivent être synchronisées en temps réel entre les différents sites, ce qui implique des volumes d'échanges importants.

Pour résoudre ce problème, les documents S2-174327 et S2-174328 du 3GPP (réunion du groupe « TSG SA WG2 » à San Jose del Cabo, Mexique, 26-30 juin 2017) proposent un procédé de basculement d'un AMF, notamment pour pouvoir procéder à l'entretien de cet AMF (dit « premier AMF »), par un ensemble d'AMFs de remplacement. Ce basculement est effectué en transférant à chaque AMF de cet ensemble une partie des utilisateurs du premier AMF ; par exemple, chaque AMF dans un ensemble de 5 AMFs de remplacement va reprendre 1/5^{e} des dispositifs-clients précédemment gérés par le premier AMF. Dans ce procédé, un nouvel identifiant « *AMF name* » est introduit pour identifier un AMF, et l'identifiant GUAMI (Globally Unique AMF ID), au lieu d'identifier un AMF particulier comme prescrit dans le document TS 23.501 mentionné ci-dessus, identifie un groupe de dispositifs-clients gérés par un AMF à un instant donné. Le transfert d'un groupe de dispositifs-clients à un nouvel AMF se fait alors en modifiant l'association entre le GUAMI et le « *AMF name* » : le GUAMI correspondant au groupe de dispositifs-clients à transférer, auparavant associé au premier AMF, devient associé à un second AMF. Cette procédure a pour avantage que les dispositifs-clients de ce groupe n'ont pas besoin de connaître l'identité de ce second AMF, mais elle a pour inconvénient que tous les noeuds du réseau qui ont besoin d'identifier l'AMF d'un dispositif-client particulier, en particulier les stations radio, les SMF (initiales des mots anglais « Session *Management Function* » signifiant « Fonction de Gestion de Session ») et le NRF (initiales des mots anglais « *Network Function Repository Function* » signifiant « Fonction Dépositaire des Fonctions Réseau »), doivent maintenir à jour de nombreuses associations entre un certain GUAMI et un certain « *AMF name* »*.*

Les documents S2-175531 et S2-176572, 3GPP TSG SA WG2 Meeting #122bis, 21-25 August 2017, "TS 23.501: AMF failure handling", proposent une solution pour remédier à la défaillance d'un AMF.

La présente invention concerne donc un procédé de basculement d'un équipement de gestion dans un réseau de télécommunications, dans lequel l'opérateur du réseau a défini au moins un ensemble donné de (*N* + 1) équipements de gestion, où *N* ≥ 2. Ledit procédé comprend, pour au moins un équipement de gestion dudit ensemble, dit « premier équipement de gestion », les étapes suivantes :
- tant que ledit premier équipement de gestion est en service :
   - lors de l'enregistrement d'au moins un dispositif-client sur le réseau, le premier équipement de gestion prend en charge ce dispositif-client,
   - ce dispositif-client enregistre l'identité du premier équipement de gestion, ainsi que l'identité d'un autre équipement de gestion dudit ensemble, dit « second équipement de gestion », qui lui est fournie par le premier équipement de gestion, et
   - le premier équipement de gestion partage ou synchronise avec ledit second équipement de gestion les données de contexte relatives à ce dispositif-client, et
- si le premier équipement de gestion devient hors service, chaque second équipement de gestion en est informé et prend en charge les dispositifs-clients dont il a partagé ou synchronisé les données de contexte avec le premier équipement de gestion.

Ainsi, au fur et à mesure de sa prise en charge de nouveaux dispositifs-clients, ledit premier équipement de gestion distribue ces dispositifs-clients au sein de N groupes, chaque groupe respectif de dispositifs-clients étant associé à un équipement de gestion de remplacement respectif de l'ensemble (ledit équipement de gestion de remplacement remplissant au moins la même fonction de gestion que le premier équipement de gestion).

Si le premier équipement de gestion de l'ensemble devient hors-service, chaque équipement de gestion de remplacement respectif ne reprend alors que les dispositifs-clients du groupe respectif ; on évite ainsi le surcroît de charge trop important qui incomberait à un unique équipement de gestion de remplacement.

On notera que la présente invention s'applique à tous les cas de basculement, c'est-à-dire aussi bien en cas de remplacement (planifié) pour entretien, qu'en cas de remplacement (non planifié) suite à une panne : en effet, chaque dispositif-client enregistre l'identité du « second » équipement de gestion qui lui est associé, de sorte que si le « premier » équipement de gestion tombe en panne, le réseau pourra être informé (comme décrit en détail ci-dessous) de l'identité de l'équipement de gestion devant reprendre ce dispositif-client. En revanche, la solution, décrite succinctement ci-dessus, des documents S2-174327 et S2-174328 ne s'applique qu'en cas de remplacement planifié. De plus, dans la présente invention, la plupart des nœuds du réseau qui ont besoin d'identifier l'équipement de gestion de chaque dispositif-client (tels que les stations radio, les SMF et le NRF) n'ont pas à stocker l'association entre l'identifiant de chaque dispositif-client et l'équipement de gestion en charge de ce dispositif-client.

On notera également que, selon l'invention, chaque équipement de gestion d'un ensemble partage ou synchronise avec un autre équipement de gestion du même ensemble, avant que cet autre équipement de gestion ne devienne hors-service, les données de contexte des dispositifs-clients qu'il va reprendre ; grâce à ces dispositions, les dispositifs-clients gérés par un équipement de gestion devenant hors-service n'ont pas à se réenregistrer lors du basculement vers l'équipement de gestion de remplacement.

Selon des caractéristiques particulières, ledit premier équipement de gestion partage ou synchronise avec un second équipement de gestion des données de contexte d'un dispositif-client dont le premier équipement de gestion a la charge, suite à l'enregistrement de ce dispositif-client sur le réseau.

Grâce à ces dispositions, les avantages du basculement selon l'invention seront préservés si le premier équipement de gestion devient hors-service après ce partage ou cette synchronisation initial(e).

Selon d'autres caractéristiques particulières, ledit premier équipement de gestion partage ou synchronise avec un second équipement de gestion des données de contexte d'un dispositif-client dont le premier équipement de gestion a la charge, suite à la réception par le premier équipement de gestion d'un message émis par ce dispositif-client.

Grâce à ces dispositions, les avantages du basculement selon l'invention sont obtenus en minimisant le nombre d'échanges d'information dans le réseau.

Selon d'autres caractéristiques particulières, après avoir pris en charge les dispositifs-clients dont il a partagé ou synchronisé les données de contexte avec le premier équipement de gestion, au moins un second équipement de gestion envoie à une entité chargée de l'enregistrement des abonnés au réseau un message contenant la liste de ces dispositifs-clients. Ladite entité pourra, notamment, être un UDM (initiales des mots anglais « *Unified Data Management* » signifiant « Gestion Unifiée des Données »).

Grâce à ces dispositions, comme expliqué en détail ci-dessous, on minimise la charge de ladite entité chargée de l'enregistrement des abonnés au réseau.

Selon un deuxième aspect, l'invention concerne divers dispositifs.

Elle concerne ainsi, premièrement, un équipement de gestion, dit « premier équipement de gestion », pour un réseau de télécommunications. Ledit premier équipement de gestion comprend des moyens pour :
- lors de l'enregistrement d'au moins un dispositif-client sur le réseau, prendre en charge ledit dispositif-client,
- fournir à ce dispositif-client l'identité d'un autre équipement de gestion, dit « second équipement de gestion », appartenant à un ensemble donné de *(N* + 1) équipements de gestion, où *N* ≥ 2, comprenant ledit premier équipement de gestion, et
- partager ou synchroniser avec ledit second équipement de gestion les données de contexte relatives à ce dispositif-client.

Selon des caractéristiques particulières, ledit premier équipement de gestion comprend en outre des moyens pour partager ou synchroniser avec un second équipement de gestion des données de contexte d'un dispositif-client dont il a la charge, suite à l'enregistrement de ce dispositif-client sur le réseau.

Selon d'autres caractéristiques particulières, ledit premier équipement de gestion comprend en outre des moyens pour partager ou synchroniser avec un second équipement de gestion des données de contexte d'un dispositif-client dont il a la charge, suite à la réception d'un message émis par ce dispositif-client.

Un mode de réalisation non revendiqué envisage également un équipement de gestion, dit « second équipement de gestion », pour un réseau de télécommunications. Ledit second équipement de gestion comprend des moyens pour :
- partager ou synchroniser avec un autre équipement de gestion, dit « premier équipement de gestion », appartenant à un ensemble donné de (*N +* 1) équipements de gestion, où *N* ≥ 2, comprenant ledit second équipement de gestion, les données de contexte relatives à un dispositif-client, et
- si ledit premier équipement de gestion devient hors service, en être informé et prendre en charge ledit dispositif-client.
Ledit second équipement de gestion comprend en outre des moyens pour, après avoir pris en charge les dispositifs-clients dont il a partagé ou synchronisé les données de contexte avec le premier équipement de gestion, envoyer à une entité chargée de l'enregistrement des abonnés au réseau un message contenant la liste de ces dispositifs-clients.

Naturellement, un équipement de gestion selon l'invention peut comprendre à la fois les moyens d'un « premier » équipement de gestion et les moyens d'un « second » équipement de gestion.

L'équipement de gestion selon l'invention pourra être, notamment, un AMF. Il pourra également être un SMF (auquel cas un AMF mémorise l'identité d'un second SMF avec lequel un premier SMF synchronise ou partage ses données).

L'invention concerne aussi, troisièmement, un dispositif-client selon la revendication 8. Ledit dispositif-client comprend des moyens pour, dans un réseau de télécommunications, recevoir de la part d'un premier équipement de gestion un message comprenant, dans un champ dédié, l'identité d'un second équipement de gestion, ainsi que des moyens pour enregistrer ladite identité du second équipement de gestion.

Selon des caractéristiques particulières, ledit dispositif-client comprend en outre des moyens pour transmettre audit réseau ladite identité du second équipement de gestion.

Les avantages offerts par tous ces dispositifs sont essentiellement les mêmes que ceux offerts par les procédés exposés succinctement ci-dessus.

On notera qu'il est possible de réaliser ces dispositifs dans le contexte d'instructions logicielles et/ou dans le contexte de circuits électroniques.

Selon un troisième aspect, l'invention concerne un réseau de télécommunications. Ledit réseau de télécommunications comprend :
- au moins un premier équipement de gestion tel que décrit succinctement ci-dessus,
- au moins un second équipement de gestion tel que décrit succinctement ci-dessus, et
- au moins un dispositif-client tel que décrit succinctement ci-dessus.

Les avantages offerts par ce réseau de télécommunications sont essentiellement les mêmes que ceux offerts par les procédés exposés succinctement ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de basculement d'un équipement de gestion exposé succinctement ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente une architecture de réseau 5G,
- la figure 2a représente la synchronisation entre deux instances d'une fonction de gestion en ce qui concerne les données de contexte relatives à un groupe de dispositifs-clients, selon une première variante de l'invention,
- la figure 2b représente le partage entre deux instances d'une fonction de gestion des données de contexte relatives à un groupe de dispositifs-clients, selon une deuxième variante de l'invention, et
- la figure 3 représente un procédé de basculement d'un équipement de gestion, selon un mode de réalisation de l'invention.

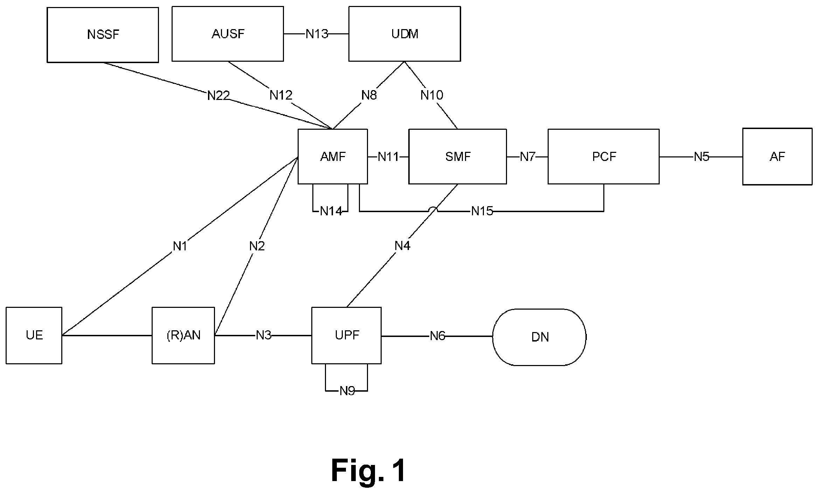

La **figure 1****,** tirée du document TS 23.501 (figure 4.2.3-2), représente une architecture de réseau 5G, comprenant un dispositif-client (UE) connecté à un réseau de données (« *Data Network* », ou DN en anglais) via :
- un Réseau d'Accès (« *Access Network* » ou AN en anglais), ce dernier pouvant être en particulier un Réseau d'Accès Radio (« *Radio Access Network* » ou RAN en anglais), et
- un UPF (initiales des mots anglais « *User Plane Function »* signifiant « Fonction de Plan d'Utilisateur ») (décrit ci-dessous).

On rappelle tout d'abord que le « NAS » (Non-Access Stratum) est, dans les systèmes de télécommunications mobiles, une couche fonctionnelle située entre le réseau cœur et un dispositif-client. Le NAS gère l'établissement des sessions de communications, et sert à maintenir la continuité de la communication avec un dispositif-client au cours de ses déplacements. Le NAS s'oppose à la couche « Access Stratum », qui est chargée du transport des informations sur la portion sans-fil du réseau.

L'AMF (Access and Mobility Management Function), mentionné ci-dessus, gère la partie des signaux du NAS se rapportant à la gestion de l'enregistrement et de la connexion des dispositifs-clients. En outre, l'AMF met notamment en œuvre les fonctionnalités suivantes :
- terminaison de l'interface du plan de contrôle du (R)AN,
- terminaison du NAS,
- chiffrement et protection de l'intégrité des messages,
- gestion de l'atteinte des dispositifs-clients,
- gestion de la mobilité,
- authentification pour l'accès, et autorisation d'accès.

Le SMF (Session Management Function), également mentionné ci-dessus, gère la partie des signaux du NAS se rapportant à la gestion des sessions (établissement, modification, libération). En outre, le SMF met notamment en œuvre les fonctionnalités suivantes :
- allocation et gestion des adresses IP des dispositifs-clients,
- routage du trafic au niveau de l'UPF (décrit ci-dessous),
- terminaison des interfaces avec les fonctions de contrôle de politique réseau,
- contrôle de la mise en application de la politique réseau et de la Qualité de Service,
- notification de données descendantes (« *downlink* » en anglais), et
- collecte des données de facturation, et interface de facturation.

Les autres entités illustrées sur la figure 1 sont les suivantes :
- le NSSF (initiales des mots anglais « *Network Slice Selection Function* » signifiant « Fonction de Sélection de Tranche Réseau »), qui met notamment en œuvre les fonctionnalités suivantes :
   - sélection de l'ensemble de tranches réseau servant le dispositif-client,
   - détermination de « l'AMF Set » ou d'une liste d'AMF possibles pour servir le dispositif-client,
- l'AUSF (initiales des mots anglais « *Authentication Server Function* » signifiant « Fonction de Serveur d'Authentification »), qui est utilisé aux fins d'authentification des dispositifs-clients,
- l'UDM (Unified Data Management), également mentionné ci-dessus, qui met notamment en œuvre les fonctionnalités suivantes :
   - traitement des preuves d'authentification,
   - traitement de l'identification d'utilisateur,
   - autorisation d'accès,
   - gestion de l'enregistrement et de la mobilité,
   - gestion des abonnements,
- le PCF (initiales des mots anglais « *Policy Control Function* » signifiant « Fonction de Contrôle de Politique Réseau »), qui met notamment en œuvre les fonctionnalités suivantes :
   - fourniture, pour leur application, des règles de politique réseau aux fonctions du plan de contrôle,
   - fourniture, dans une base de données (Unified Data Repository, ou UDR), d'un point d'accès pour l'obtention d'informations sur les abonnements nécessaires pour pouvoir appliquer les décisions de politique réseau,
- l'AF (initiales des mots anglais « *Application Fonction* » signifiant « Fonction d'Application »), qui interagit avec le cœur de réseau pour fournir des services, par exemple pour mettre en œuvre :
   - des actions sur le routage du trafic,
   - des interactions avec l'architecture de contrôle de politique réseau, et
- l'UPF, mentionné ci-dessus, qui met notamment en œuvre les fonctionnalités suivantes :
   - point d'ancrage pour la mobilité intra- ou inter-RAT (RAT sont les initiales des mots anglais « *Radio Access Technology* » signifiant « Technologie de Réseau d'Accès »),
   - routage et retransmission des paquets de données,
   - inspection des paquets et application des règles de politique réseau dans le plan d'utilisateur,
   - compte-rendu de l'utilisation du trafic,
   - gestion de la Qualité de Service dans le plan d'utilisateur, par exemple filtrage de paquets, et application du taux de paquets montants ou descendants (*uplink*/*downlink*)*,*
   - marquage des paquets montants ou descendants au niveau du transport,
   - mise en mémoire tampon des paquets descendants, et déclenchement de la notification des données descendantes.

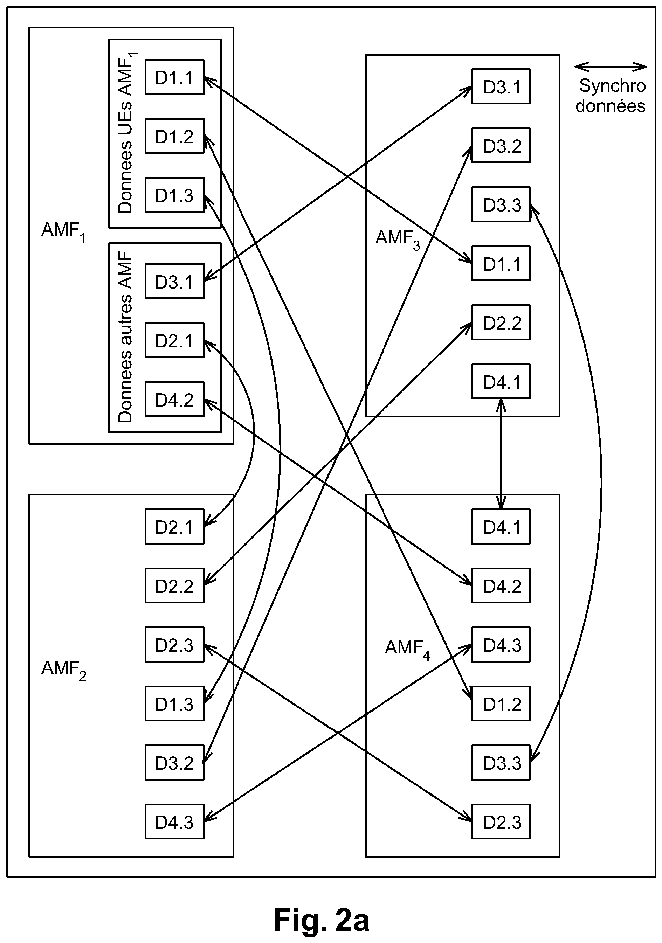

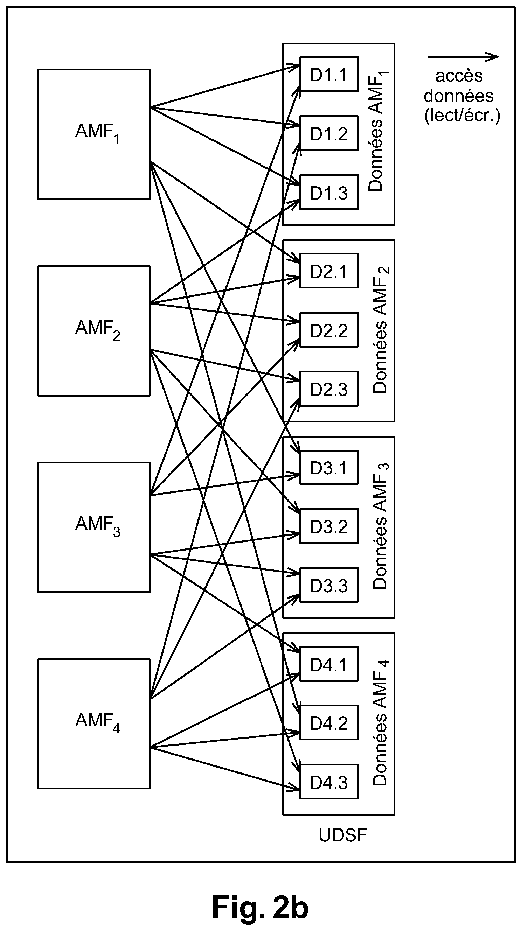

Considérons à présent un réseau dont l'opérateur a défini au moins un « AMF Set », c'est-à-dire un ensemble donné de (*N +* 1) AMFs, où *N* est un entier au moins égal à 2. On va décrire à présent selon deux variantes de l'invention, en référence respectivement aux **figures 2a** **et** **2b****,** le traitement de données de contexte relatives à un groupe de dispositifs-clients au sein d'un AMF Set.

Dans ces variantes, les dispositifs-clients gérés par un AMF quelconque de l'AMF Set sont répartis en un nombre choisi de N groupes, et les données relatives à ces dispositifs-clients sont divisées en N segments correspondant à ces *N* groupes de dispositifs-clients. Chacun des *N* segments est synchronisé ou partagé avec un seul autre AMF :
- on parle de « synchronisation » lorsque les données des AMFs sont stockées dans les AMFs eux-mêmes ; les AMF échangent alors les données directement entre eux ;
- on parle de « partage » lorsque les données des AMFs sont stockées dans une base de données externe, par exemple un UDSF (Unstructured Data Storage Function) ; le partage se fait alors en donnant accès à deux AMFs, et deux seulement, pour chaque segment de données.

Ces deux variantes sont illustrées respectivement sur les figures 2a et 2b, avec *N* = 3. Sur ces figures, D1.1, D1.2, etc. désignent les données de groupes respectifs de dispositifs-clients.

On notera que l'on pourrait étendre ce principe en synchronisant ou partageant les données d'un groupe de dispositifs-clients entre *m* > 2 AMFs pour accroître la résilience, mais l'on a intérêt à limiter ce nombre *m* afin de limiter le volume de données à stocker ou à échanger.

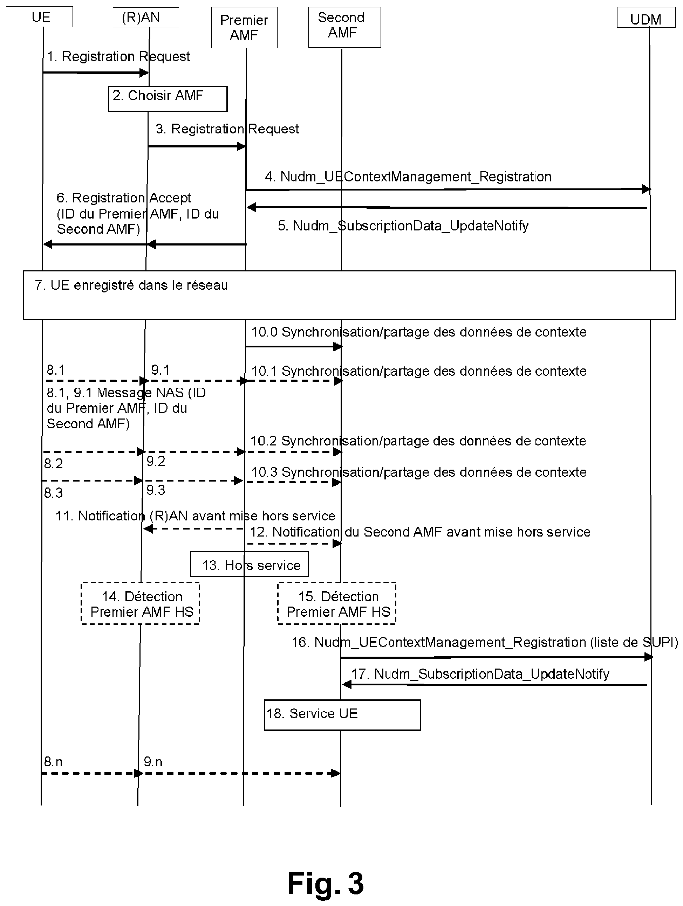

La **figure 3** présente un procédé de basculement d'un équipement de gestion, selon un mode de réalisation de l'invention. Ce mode de réalisation comprend les étapes suivantes.

Selon une première étape, un dispositif-client envoie une requête d'enregistrement au réseau d'accès.

Selon une deuxième étape, le réseau d'accès attribue à ce dispositif-client un AMF, dit « premier AMF », appartenant à un certain AMF Set.

Selon une troisième étape, le réseau d'accès transmet la requête d'enregistrement au premier AMF.

Selon une quatrième étape, de manière connue en soi, le premier AMF envoie à l'UDM (mentionné ci-dessus) un message « Nudm_UE_Context Management _Registration » pour déclarer sa prise en charge de ce dispositif-client.

Selon une cinquième étape, de manière connue en soi, l'UDM envoie au premier AMF un message de confirmation « Nudm_SubscriptionData_UpdateNotifiy ».

Selon une sixième étape, le premier AMF envoie au dispositif-client, via le réseau d'accès, un message « Registration Accept » de confirmation d'enregistrement ; le dispositif-client enregistre alors l'identité du premier AMF, (par exemple le GUAMI, décrit ci-dessus). On notera qu'une procédure analogue est décrite dans la Section 4.2.2.2.2 du document TS 23.502, ainsi que dans la Section 8.2.7.1 et l'Annexe C du document TS 24.501 (transmission et enregistrement du « 5G-GUTI », lequel contient à la fois un identifiant de l'AMF et un identifiant temporaire du dispositif-client). Toutefois, dans le présent mode de réalisation, le message « Registration Accept » est enrichi avec l'identité d'un autre AMF, dit « second AMF », de l'AMF Set, sélectionné par le premier AMF pour ce dispositif-client ; cette identité du second AMF peut être avantageusement insérée par le premier AMF dans un champ dédié à la mise en œuvre de la présente invention du message « Registration Accept » ; le dispositif-client enregistre également l'identité du second AMF (par exemple son GUAMI).

Le dispositif-client est dès lors enregistré sur le réseau (septième étape). On effectue alors immédiatement (étape 10.0) un partage/synchronisation entre le premier et le second AMF des données de contexte de ce dispositif-client.

Le partage/synchronisation entre le premier et le second AMF des données de contexte de ce dispositif-client est renouvelé ensuite (étapes 8.1-9.1-10.1, 8.2-9.2-10.2, 8.3-9.3-10.3, et ainsi de suite) à l'occasion de divers messages émis par le dispositif-client, sans que le dispositif-client n'ait à effectuer de procédure particulière à cet effet, et en particulier sans qu'il soit nécessaire de procéder à une nouvelle authentification du dispositif-client. Ces messages, dits « messages NAS » (Non Access Stratum), peuvent être, par exemple, une mise à jour de localisation, un message de transition entre les modes veille et connecté, ou une requête de fin d'enregistrement.

De préférence, le dispositif-client insère l'identité du second AMF, obtenue comme décrit ci-dessus, dans au moins un message NAS envoyé au réseau d'accès, par exemple à une station de base telle qu'un gNB ; l'identité du second AMF s'avèrera utile notamment au cas où le premier AMF devient hors-service et ne peut pas recevoir les messages NAS émis par le dispositif-client ; l'identité du second AMF servira alors au réseau d'accès pour aiguiller ces messages NAS vers le second AMF.

Les étapes ci-dessus sont répétées lors de chaque attribution du même premier AMF à un nouveau dispositif-client s'enregistrant sur le réseau, l'identité du « second AMF » pouvant évidemment varier d'un dispositif-client à un autre.

Par ailleurs, le partage/synchronisation entre le premier AMF et chaque second AMF des données de contexte des dispositifs-clients concernés est effectué en continu.

Si, lors d'une treizième étape, le premier AMF devient hors service, le réseau d'accès en est informé, soit parce qu'il en a été notifié par le premier AMF lui-même (onzième étape) comme spécifié dans la Section 5.21.2.2 du document TS 23.501, soit parce qu'il l'a détecté par ses propres moyens (quatorzième étape).

Chacun des AMFs de l'AMF Set constituant un « second AMF » pour le premier AMF en est informé lui aussi, soit parce qu'il en a été notifié par le premier AMF lui-même (douzième étape), soit parce qu'il l'a détecté par ses propres moyens (quinzième étape), par exemple grâce à un échange régulier de messages de type « *hearbeat* » avec le premier AMF.

Selon une seizième étape, chaque second AMF informe l'UDM du fait qu'il est désormais en charge d'un certain nombre de dispositifs-clients repris du premier AMF, afin que le réseau puisse router correctement, c'est-à-dire via ce second AMF, les futurs messages de signalisation vers ces dispositifs-clients.

On notera que le basculement d'un équipement de gestion est réalisé classiquement par une procédure dite « Update Location » en 4G, ou par envoi d'un message « Nudm_UE_Context Management_Registration » en 5G, mais de manière individuelle pour chaque dispositif-client. Dans le présent mode de réalisation, chaque second AMF utilise un message « Nudm_UE_Context Management_Registration » modifié pour, d'une part, indiquer à l'UDM que le premier AMF est hors service, et d'autre part fournir à l'UDM la liste des dispositifs-clients repris par ce second AMF, au lieu d'un seul dispositif-client comme dans l'art antérieur. Ces dispositifs-clients peuvent par exemple, de façon connue en soi dans la technologie 5G, être identifiés par leur SUPI (Subscriber Permanent Identifier), qui est l'équivalent de l'IMSI (International Mobile Subscriber Identity) en technologie 4G. Ces deux modifications permettent de réduire considérablement la charge de l'UDM, car :
- l'UDM reçoit un seul message par second AMF, au lieu de recevoir autant de messages qu'il y a de dispositifs-clients repris du premier AMF par un second AMF, et
- l'UDM peut s'abstenir de notifier le premier AMF du fait que ces dispositifs-clients ne sont plus gérés par le premier AMF, alors que la notification classique en 4G lors d'un basculement de MME (Message Cancel Location), respectivement en 5G lors d'un basculement d'AMF (message « Nudm_UE_Context_Management_RemoveNotification »), est émise pour chaque dispositif-client précédemment géré par le premier équipement de gestion (MME, respectivement AMF).

Selon une dix-septième étape, l'UDM envoie au second AMF un message de confirmation « Nudm_SubscriptionData_UpdateNotifiy » analogue au message de la cinquième étape décrite ci-dessus.

Enfin, selon une dix-huitième étape, grâce aux données de contexte précédemment partagées ou synchronisées avec le premier AMF, ce second AMF prend directement le relais pour servir ledit groupe de dispositifs-clients. Le second AMF envoie alors son identifiant (par exemple son GUAMI) de manière classique, ainsi que, conformément à l'invention, l'identifiant d'un AMF de remplacement, à chacun des dispositifs-clients de ce groupe.

L'invention peut être mise en œuvre au sein des nœuds, par exemple des équipements de gestion ou des dispositifs-clients de réseaux de communication, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de basculement d'un équipement de gestion selon l'invention.

En effet, l'invention vise aussi un programme d'ordinateur téléchargeable depuis un réseau de communication comprenant des instructions pour l'exécution des étapes d'un procédé de basculement d'un équipement de gestion selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de basculement d'un équipement de gestion selon l'invention.

## Revendications

1. Procédé de basculement d'un équipement de gestion dans un réseau de télécommunications, dans lequel l'opérateur du réseau a défini au moins un ensemble donné de *N +* 1 équipements de gestion, où *N* ≥ 2, ledit procédé comprenant, pour au moins un équipement de gestion dudit ensemble, dit « premier équipement de gestion », les étapes suivantes :
- tant que ledit premier équipement de gestion est en service :
• lors de l'enregistrement d'au moins un dispositif-client sur le réseau, le premier équipement de gestion prend en charge ce dispositif-client,
• ce dispositif-client enregistre l'identité du premier équipement de gestion, ainsi que l'identité d'un autre équipement de gestion dudit ensemble, dit « second équipement de gestion », qui lui est fournie par le premier équipement de gestion, et
• le premier équipement de gestion partage ou synchronise avec ledit second équipement de gestion les données de contexte relatives à ce dispositif-client, et
- si le premier équipement de gestion devient hors service, chaque second équipement de gestion en est informé et prend en charge les dispositifs-clients dont il a partagé ou synchronisé les données de contexte avec le premier équipement de gestion.

2. Procédé de basculement selon la revendication 1, **caractérisé en ce que** ledit premier équipement de gestion partage ou synchronise avec un second équipement de gestion des données de contexte d'un dispositif-client dont le premier équipement de gestion a la charge, suite à l'enregistrement de ce dispositif-client sur le réseau.

3. Procédé de basculement selon la revendication 1 ou la revendication 2, **caractérisé en ce que** ledit premier équipement de gestion partage ou synchronise avec un second équipement de gestion des données de contexte d'un dispositif-client dont le premier équipement de gestion a la charge, suite à la réception par le premier équipement de gestion d'un message émis par ce dispositif-client.

4. Procédé de basculement selon l'une quelconque des revendications 1 à 3, **caractérisé en ce que**, après avoir pris en charge les dispositifs-clients dont il a partagé ou synchronisé les données de contexte avec le premier équipement de gestion, au moins un second équipement de gestion envoie à une entité chargée de l'enregistrement des abonnés au réseau un message contenant la liste de ces dispositifs-clients.

5. Equipement de gestion, dit « premier équipement de gestion », pour un réseau de télécommunications, comprenant des moyens pour :
- lors de l'enregistrement d'au moins un dispositif-client sur le réseau, prendre en charge ledit dispositif-client,
- fournir à ce dispositif-client l'identité d'un autre équipement de gestion, dit « second équipement de gestion », appartenant à un ensemble donné de *N +* 1 équipements de gestion, où *N* ≥ 2, comprenant ledit premier équipement de gestion, et
- partager ou synchroniser avec ledit second équipement de gestion les données de contexte relatives à ce dispositif-client.

6. Equipement de gestion selon la revendication 5, **caractérisé en ce qu'**il comprend en outre des moyens pour partager ou synchroniser avec un second équipement de gestion des données de contexte d'un dispositif-client dont il a la charge, suite à l'enregistrement de ce dispositif-client sur le réseau.

7. Equipement de gestion selon la revendication 5 ou la revendication 6, **caractérisé en ce qu'**il comprend en outre des moyens pour partager ou synchroniser avec un second équipement de gestion des données de contexte d'un dispositif-client dont il a la charge, suite à la réception d'un message émis par ce dispositif-client.

8. Dispositif-client comprenant des moyens pour, dans un réseau de télécommunications, recevoir un message lors d'un enregistrement du dispositif-client sur le réseau, de la part d'un premier équipement de gestion de l'accès et de la mobilité du réseau en service, ledit message comprenant, dans un champ dédié, l'identité d'un second équipement de gestion de l'accès et de la mobilité du réseau, ainsi que des moyens pour enregistrer une identité du premier équipement de gestion et ladite identité du second équipement de gestion.

9. Dispositif-client selon la revendication 8, **caractérisé en ce qu'**il comprend en outre des moyens pour transmettre audit réseau ladite identité du second équipement de gestion.

10. Réseau de télécommunications, comprenant :
- au moins un premier équipement de gestion de l'accès et de la mobilité selon l'une quelconque des revendications 5 à 7,
- au moins un second équipement de gestion de l'accès et de la mobilité,
et
- au moins un dispositif-client selon la revendication 8 ou la revendication 9,
ledit second équipement de gestion comprenant des moyens pour :
- partager ou synchroniser avec ledit premier équipement de gestion, appartenant à un ensemble donné de *N +* 1 équipements de gestion, où *N* ≥ 2, comprenant ledit second équipement de gestion, les données de contexte relatives au dispositif-client, et
- si ledit premier équipement de gestion devient hors service, en être informé et prendre en charge ledit dispositif-client,
ledit second équipement de gestion comprenant en outre des moyens pour, après avoir pris en charge les dispositifs-clients dont il a partagé ou synchronisé les données de contexte avec le premier équipement de gestion, envoyer à une entité chargée de l'enregistrement des abonnés au réseau un message contenant la liste de ces dispositifs-clients.

11. Moyen de stockage de données inamovible, ou partiellement ou totalement amovible, comportant des instructions de code de programme informatique pour l'exécution des étapes d'un procédé de basculement d'un équipement de gestion selon l'une quelconque des revendications 1 à 4.

12. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de basculement d'un équipement de gestion selon l'une quelconque des revendications 1 à 4, lorsqu'il est exécuté sur un ordinateur.

## Patentansprüche

1. Verfahren zum Umschalten einer Managementeinrichtung in einem Telekommunikationsnetz, in dem der Betreiber des Netzes mindestens eine gegebene Menge von *N +* 1 Managementeinrichtungen mit *N* ≥ 2 definiert hat, wobei das Verfahren, für mindestens eine Managementeinrichtung der Menge, "erste Managementeinrichtung" genannt, die folgenden Schritte umfasst:
- solange die erste Managementeinrichtung in Betrieb ist:
• übernimmt bei der Registrierung mindestens einer Client-Vorrichtung im Netz die erste Managementvorrichtung diese Client-Vorrichtung,
• registriert diese Client-Vorrichtung die Identität der ersten Managementeinrichtung sowie die Identität einer weiteren Managementeinrichtung der Menge, "zweite Managementeinrichtung" genannt, die ihr von der ersten Managementeinrichtung bereitgestellt wird, und
• teilt oder synchronisiert die erste Managementeinrichtung mit der zweiten Managementeinrichtung die Kontextdaten bezüglich dieser Client-Vorrichtung, und
- wenn die erste Managementeinrichtung außer Betrieb geht, wird jede zweite Managementeinrichtung darüber informiert und übernimmt die Client-Vorrichtungen, deren Kontextdaten sie mit der ersten Managementeinrichtung geteilt oder synchronisiert hat.

2. Verfahren zum Umschalten nach Anspruch 1, **dadurch gekennzeichnet, dass** die erste Managementeinrichtung mit einer zweiten Managementeinrichtung Kontextdaten einer Client-Vorrichtung teilt oder synchronisiert, die die erste Managementeinrichtung übernommen nach der Registrierung dieser Client-Vorrichtung im Netz übernommen hat.

3. Verfahren zum Umschalten nach Anspruch 1 oder Anspruch 2, **dadurch gekennzeichnet, dass** die erste Managementeinrichtung mit einer zweiten Managementeinrichtung Kontextdaten einer Client-Vorrichtung teilt oder synchronisiert, die die erste Managementeinrichtung nach dem Empfangen einer von dieser Client-Vorrichtung gesendeten Nachricht durch die erste Managementeinrichtung übernommen hat.

4. Verfahren zum Umschalten nach einem der Ansprüche 1 bis 3, **dadurch gekennzeichnet, dass**, nach dem Übernehmen der Client-Vorrichtung, deren Kontextdaten sie mit der ersten Managementeinrichtung geteilt oder synchronisiert hat, mindestens eine zweite Managementeinrichtung an eine für die Registrierung der Teilnehmer im Netz zuständige Einheit eine Nachricht sendet, die die Liste dieser Client-Vorrichtungen enthält.

5. Managementeinrichtung, "erste Managementeinrichtung" genannt, für ein Telekommunikationsnetz, umfassend Mittel, um:
• bei der Registrierung mindestens einer Client-Vorrichtung im Netz die Client-Vorrichtung zu übernehmen,
- dieser Client-Vorrichtung die Identität einer weiteren Managementeinrichtung, "zweite Managementeinrichtung" genannt, bereitzustellen, die zu einer gegebenen Menge von *N* + 1 Managementeinrichtungen mit *N* ≥ 2 gehört, die die erste Managementeinrichtung umfasst, und
• mit der zweiten Managementeinrichtung die Kontextdaten bezüglich dieser Client-Vorrichtung zu teilen oder zu synchronisieren.

6. Managementeinrichtung nach Anspruch 5, **dadurch gekennzeichnet, dass** sie ferner Mittel umfasst, um mit einer zweiten Managementeinrichtung Kontextdaten einer Client-Vorrichtung zu teilen oder zu synchronisieren, die sie nach der Registrierung dieser Client-Vorrichtung im Netz übernommen hat.

7. Managementeinrichtung nach Anspruch 5 oder Anspruch 6, **dadurch gekennzeichnet, dass** sie ferner Mittel umfasst, um mit einer zweiten Managementeinrichtung Kontextdaten einer Client-Vorrichtung zu teilen oder zu synchronisieren, die sie nach dem Empfangen einer von dieser Client-Vorrichtung gesendeten Nachricht übernommen hat.

8. Client-Vorrichtung, umfassend Mittel, um, in einem Telekommunikationsnetz, eine Nachricht bei einer Registrierung der Client-Vorrichtung im Netz seitens einer ersten in Betrieb befindlichen Managementeinrichtung des Netzes für den Zugang und die Mobilität zu empfangen, wobei die Nachricht, in einem dedizieren Feld, die Identität einer zweiten Managementeinrichtung des Netzes für den Zugang und die Mobilität umfasst, sowie Mittel, um eine Identität der ersten Managementeinrichtung und die Identität der zweiten Managementeinrichtung zu registrieren.

9. Client-Vorrichtung nach Anspruch 8, **dadurch gekennzeichnet, dass** sie ferner Mittel umfasst, um an das Netz die Identität der zweiten Managementeinrichtung zu übertragen.

10. Telekommunikationsnetz, umfassend:
- mindestens eine erste Managementeinrichtung für den Zugang und die Mobilität nach einem der Ansprüche 5 bis 7,
- mindestens eine zweite Managementeinrichtung für den Zugang und die Mobilität, und
- mindestens eine Client-Vorrichtung nach Anspruch 8 oder Anspruch 9, wobei die zweite Managementeinrichtung Mittel umfasst, um:
- mit der ersten Managementeinrichtung, die zu einer gegebenen Menge von *N +* 1 Managementeinrichtungen mit *N* ≥ 2 gehört, die die zweite Managementeinrichtung umfasst, die Kontextdaten bezüglich der Client-Vorrichtung zu teilen oder zu synchronisieren, und
- wenn die erste Managementeinrichtung außer Betrieb geht, darüber informiert zu werden und die Client-Vorrichtung zu übernehmen,
wobei die zweite Managementeinrichtung ferner Mittel umfasst, um, nachdem sie die Client-Vorrichtungen übernommen hat, deren Kontextdaten sie mit der ersten Managementeinrichtung geteilt oder synchronisiert hat, an eine für die Registrierung der Teilnehmer im Netz zuständige Einheit eine Nachricht zu senden, die die Liste dieser Client-Vorrichtungen enthält.

11. Nicht entnehmbares oder teilweise oder vollständig entnehmbares Datenspeichermedium, das Computerprogrammcodeanweisungen zum Ausführen der Schritte eines Verfahrens zum Umschalten einer Managementeinrichtung nach einem der Ansprüche 1 bis 4 beinhaltet.

12. Computerprogramm, das über ein Kommunikationsnetz herunterladbar ist und/oder auf einem computerlesbaren Medium gespeichert ist und/oder von einem Mikroprozessor ausführbar ist, **dadurch gekennzeichnet, dass** es Anweisungen umfasst, die bei seiner Ausführung auf einem Computer die Schritte eines Verfahrens zum Umschalten einer Managementeinrichtung nach einem der Ansprüche 1 bis 4 ausführen.

## Claims

1. Method for toggling a management device in a telecommunications network, in which the operator of the network has defined at least one given set of *N* + 1 management devices, where *N* ≥ 2, said method comprising, for at least one management device of said set, termed "first management device", the following steps:
- as long as said first management device is in service:
• during the registration of at least one client equipment on the network, the first management device takes responsibility for this client equipment,
• this client equipment registers the identity of the first management device, as well as the identity of another management device of said set, termed "second management device", which identity is provided to it by the first management device, and
• the first management device shares or synchronizes with said second management device the context data relating to this client equipment, and
- if the first management device goes off-service, each second management device is informed thereof and takes responsibility for the client equipments for which it has shared or synchronized the context data with the first management device.

2. Toggling method according to Claim 1, **characterized in that** said first management device shares or synchronizes with a second management device context data of a client equipment for which the first management device is responsible, following the registration of this client equipment on the network.

3. Toggling method according to Claim 1 or Claim 2, **characterized in that** said first management device shares or synchronizes with a second management device context data of a client equipment for which the first management device is responsible, following the reception by the first management device of a message dispatched by this client equipment.

4. Toggling method according to any one of Claims 1 to 3, **characterized in that**, after having taken responsibility for the client equipments for which it has shared or synchronized the context data with the first management device, at least one second management device sends a message containing the list of these client equipments to an entity responsible for the registration of the subscribers to the network.

5. Management device, termed "first management device", for a telecommunications network, comprising means for:
- during the registration of at least one client equipment on the network, taking responsibility for said client equipment,
- providing this client equipment with the identity of another management device, termed "second management device", belonging to a given set of *N* + 1 management devices, where *N* ≥ 2, comprising said first management device, and
- sharing or synchronizing with said second management device the context data relating to this client equipment.

6. Management device according to Claim 5, **characterized in that** it furthermore comprises means for sharing or synchronizing with a second management device context data of a client equipment for which it is responsible, following the registration of this client equipment on the network.

7. Management device according to Claim 5 or Claim 6, **characterized in that** it furthermore comprises means for sharing or synchronizing with a second management device context data of a client equipment for which it is responsible, following the reception of a message dispatched by this client equipment.

8. Client equipment comprising means for, in a telecommunications network, receiving from a first access and mobility management device of the network in service a message during registration of the client equipment on the network, said message comprising, in a dedicated field, the identity of a second access and mobility management device of the network, as well as means for registering an identity of the first management device and said identity of the second management device.

9. Client equipment according to Claim 8, **characterized in that** it furthermore comprises means for transmitting said identity of the second management device to said network.

10. Telecommunications network, comprising:
- at least one first access and mobility management device according to any one of Claims 5 to 7,
- at least one second access and mobility management device and
- at least one client equipment according to Claim 8 or Claim 9,
said second management device comprising means for:
- sharing or synchronizing with said first management device, belonging to a given set of *N* + 1 management devices, where *N* ≥ 2, comprising said second management device, the context data relating to the client equipment, and
- if said first management device goes off-service, being informed thereof and taking responsibility for said client equipment,
said second management device furthermore comprising means for, after having taken responsibility for the client equipments for which it has shared or synchronized the context data with the first management device, sending a message containing the list of these client equipments to an entity responsible for the registration of the subscribers to the network.

11. Irremovable, or partially or totally removable means of data storage, comprising computer program code instructions for the execution of the steps of a method for toggling a management device according to any one of Claims 1 to 4.

12. Computer program downloadable from a communication network and/or stored on a medium readable by computer and/or executable by a microprocessor, **characterized in that** it comprises instructions for the execution of the steps of a method for toggling a management device according to any one of Claims 1 to 4, when it is executed on a computer.
